# EUROPÄISCHE PATENTSCHRIFT

(11) **EP 0 943 266 B1**
(45) Veröffentlichungstag und Bekanntmachung des Hinweises auf die Patenterteilung: **09.04.2003**
(21) Anmeldenummer: 99102118.9
(22) Anmeldetag: 03.02.1999
(51) Int. Cl.: A47B 96/20, B29C 53/06

(54) **Verfahren zum Herstellen von Möbelkorpussen**
Process for manufacture of furniture casings
Processus de fabrication de corps de meubles

(30) Priorität: 18.03.1998 DE 19811767; 27.10.1998 DE 19849504
(43) Veröffentlichungstag der Anmeldung: 22.09.1999
(73) Patentinhaber: Riesmeier, Wilhelm, 32312 Lübbecke (DE)
(72) Erfinder: Riesmeier, Wilhelm, 32312 Lübbecke (DE)
(74) Vertreter: Patentanwälte Dipl.-Ing. Bodo Thielking Dipl.-Ing. Otto Elbertzhagen

(56) Entgegenhaltungen:
- EP-A- 0 249 592
- EP-A- 0 423 596
- CH-A- 272 645
- GB-A- 2 135 750
- US-A- 2 500 338

## Beschreibung

Die Erfindung bezieht sich auf ein Verfahren zum Herstellen von Möbelkorpussen der im Oberbegriff des Patentanspruchs 1 näher bezeichneten Art sowie auf einen Möbelkorpus gemäß den Merkmalen des Oberbegriffs des Patentanspruchs 17.

Aus dem Dokument DT-OS 1 628 963 ist das sogenannte Folienfaltverfahren zum Herstellen von Möbelkorpussen bekannt. Hiernach werden in eine Platte als Ausgangswerkstück entlang der zu bildenden Eckkanten von der späteren Innenseite des Korpus her V-förmige Nuten eingefräst, deren V-Winkel in der Regel 90 Grad beträgt. Diese Nuten werden bis nahe an die Außenseite der dadurch gebildeten Korpusseiten eingesenkt, wobei im Scheitelbereich jeder einzelnen V-Nut ein Filmscharnier gebildet ist, welches entweder aus dem Beschichtungsstoff des betreffenden Plattenmaterials oder aus einem außenseitig auf die Ausgangsplatte aufgeklebten Folienstreifen besteht. Dieses Filmscharnier bildet die Schwenkachse, um die jeweils benachbarten Korpusseiten über einen Winkel hinweg, der dem V-Winkel der eingeschnittenen Nuten entspricht, gegeneinander falten oder schwenken zu können, wonach die durch die V-Nuten gebildeten Gehrungsflächen, also die geschrägten Schmalflächenseiten der Korpusseiten, aneinanderliegen und durch Zugabe eines Klebers oder Leims miteinander verbunden werden können. Sofern aufgeklebte Folienstreifen das Filmscharnier bilden, werden sie nach dem Zusammenfalten der Korpusseiten wieder entfernt.

Meist sind die Ausgangsplatten mit duroplastischen Materialien außenseitig beschichtet, und die daraus gebildete Deckschicht eignet sich nicht besonders gut für das Folienfaltverfahren, weil sie aufgrund partiell unterschiedlicher Biegeeigenschaften zu einem ungeraden, meist leicht gewellten Kantenverlauf führt. Oft entstehen auch unerwünscht scharfe Eckkanten zwischen den benachbarten Plattenteilen, was sich auch dann nicht vermeiden läßt, wenn als Filmscharniere aufgeklebte Folien verwendet werden. Bei Beschichtungsmaterialien, die zum Brechen neigen, wie Furnieren, ist das Aufkleben von Folienstreifen als Filmschanrier ohnehin unerläßlich, und es entstehen hierbei nach Durchführen der Faltungen und Entfernen der Folienstreifen erst recht scharfe Kanten.

Aus dem Dokument GB-A 2 135 750 ist ein Faltverfahren zur Herstellung eines Möbelkorpus bekannt, bei dem ebenfalls bei der Ausgangsplatte an der im nachhinein beim Korpus innenliegenden Seite entlang der zu bildenden Eckkanten eine V-förmige Nut eingefräst wird. Die dadurch gebildeten Korpusseiten werden auch hier um eine Achse gegeneinander geschwenkt, die durch den Scheitel der jeweiligen V-Nut hindurchgeht. Vor dem Anbringen der V-Nuten werden an der im nachhinein beim fertigen Korpus außenliegenden Seite der Ausgangsplatte entlang der zu bildenden Eckkanten profilierte Aussparungen eingeschnitten, in die ein biegsamer Streifen eingelegt, bündig mit der Außenseite der Platte geschliffen und mit einer Deckfolie überklebt wird, mit der die gesamte beim fertigen Korpus außenliegenden Seite der Ausgangsplatte kaschiert wird. Am Grund sind die außenseitigen Aussparungen der Ausgangsplatte mit Rundungen versehen, auf denen sich der einliegende Streifen beim Faltvorgang abstützt, um nach dem Faltvorgang eine deutlich gerundete äußere Eckkante zu bilden, über die hinweg sich die den Korpus an der Außenseite kaschierende Folie erstreckt. Folglich hat der für die Kantenrundung erforderliche Stütz-Streifen nicht die Funktion eines Filmscharniers und ist am fertigen Korpus nicht sichtbar.

Der Erfindung liegt die Aufgabe zugrunde, ein Verfahren der eingangs genannten Art vorzuschlagen, bei dem das Filmscharnier an der sogenannten Außenseite der Ausgangsplatte angebracht wird und sichtbar bleibt und bei dem man hinsichtlich der technischen und der ästhetischen Bedingungen bessere Anpassungs- und Variationsmöglichkeiten in der Ausbildung der Korpuskanten hat.

Diese Aufgabe wird durch die Verfahrensmerkmale des Patentanspruchs 1 gelöst.

Für die Erfindung ist wesentlich, daß nicht der Werkstoff der Ausgangsplatte, wie deren Beschichtungsmaterial, das Filmscharnier bildet, sondern ein passend wählbares Kunststoffmaterial, welches in diejenige Nut eingebracht wird, die zusätzlich an der im nachhinein außenliegenen Seite entlang der Faltlinie bzw. der Scharnierachse in die Ausgangsplatte eingefräst wird. Es gibt geeignete Kunststoffmaterialien, die im verfestigten Zustand eine ausreichende Biegefähigkeit und Reißfestigkeit haben, um das Filmscharnier bilden zu können. Es können solche Kunststoffe sein, die eine für die Bearbeitungsdauer ausreichend langdauernde Elastizität oder Plastizität haben und erst im nachhinein voll aushärten. Andererseits sind auch dauerelastische Kunststoffmaterialien, wie Thermoplaste, verwendbar, was mit davon abhängt, welche ästhetische Gestaltung man entlang der äußeren Eckkante der miteinander übereck verbundenen Plattenteile wünscht. So kann das Kunststoffmaterial, welches das Filmscharnier bildet, zu dem Beschichtungswerkstoff der Plattenteile an der Außenseite farblich kontrastieren.

Die Erfindung wird nachfolgend anhand der Zeichnung an Ausführungsbeispielen noch näher erläutert. Dabei zeigen:
- Fig. 1: oben den Querschnitt und unten die Draufsicht eines Abschnittes einer Platte als Ausgangsmaterial zur Herstellung eines Möbelkorpus nach den ersten beiden Bearbeitungsschritten,
- Fig. 2: oben den Querschnitt und unten die Draufsicht auf den Plattenabschnitt gemäß Figur 1 nach dem dritten Bearbeitungsschritt,
- Fig. 3: oben die Seitansicht und unten die Draufsicht der Platte nach den Figuren 1 und 2 nach dem vierten Bearbeitungsschritt,
- Fig. 4: den Querschnitt durch die Platte nach den Figuren 1 bis 3 nach dem nachfolgenden Bearbeitungsschritt,
- Fig. 5: den Querschnitt durch die aus der Platte nach den Figuren 1 bis 4 gebildeten Korpusseiten in zusammengeschwenkter Anordnung;
- Fig. 6: einen der Figur 4 entsprechenden Querschnitt durch die Platte zur Verdeutlichung eines abgeänderten Bearbeitungsschrittes,
- Fig. 7: den Querschnitt durch die aus der Platte nach Figur 6 gebildeten, benachbarten Korpusseiten in zusammengeschwenkter Anordnung,
- Fig. 8: eine Querschnittsdarstellung durch aneinandergefügte, die Korpusseiten bildenden Plattenteile unterschiedlicher Dicke,
- Fig. 9: den Querschnitt durch die aus den Plattenteilen nach Figur 8 gebildeten Korpusseiten in zusammengeschwenkter Anordnung,
- Fig. 10: die Stirnansicht eines weitgehend zusammengefügten Möbelkorpus vor dem Zusammenfügen im Bereich der vierten Eckkante und
- Fig. 11: eine Teil-Stirnansicht des Möbelkorpus gemäß Figur 10 in endgültig zusammengefügter Anordnung im Bereich der vierten Eckkante.

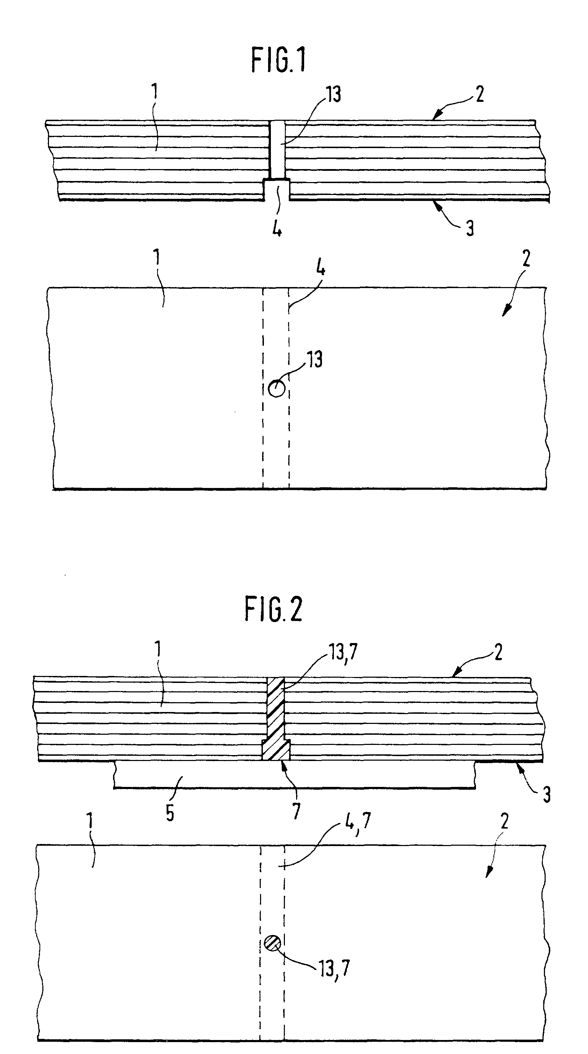

Figur 1 zeigt eine ebene Platte 1, aus der Korpusseiten bildende Plattenteile entstehen, aus denen ein Korpus beispielsweise für ein Küchenmöbel zusammengefügt werden kann. An einem solchen Korpus gibt es innenliegende Seiten, welche durch die Innenseite 2 der Platte 1 gebildet werden, die in der Zeichnung nach oben hin liegend dargestellt ist. Entsprechend wird durch die in der Zeichnung nach unten hin liegende Seite der Platte 1 die Außenseite 3 gebildet, die als erste bearbeitet wird. Üblicherweise besteht eine solche Platte 1 aus einem Spanplattenmaterial, welches an seinen beiden Seiten mittels eines Beschichtungswerkstoffs, wie einer HPL-Platte, beschichtet ist. In die in der Regel quadratische oder rechteckige Platte 1 werden an der Außenseite 3 parallel zu einer der Quadrat- oder Rechteckseiten Nuten 4 eingefräst, die einen rechteckigen oder quadratischen Querschnitt haben.

Anstelle einer einstückigen Platte 1, aus der nachfolgend erst die Korpusseiten bildenden Plattenteile gebildet werden, können auch getrennte Plattenteile gleicher oder unterschiedlicher Dicke verwendet werden, deren Gesamtformat sich zu dem der Platte 1 ergänzt. Entsprechend werden diese Plattenteile mit ihren Schmalflächenseiten aneinandergefügt und fixiert, wobei die zwischen den Plattenteilen jeweils verlaufende Stoßfuge sich entlang der im nachhinein zu bildenden Eckkante erstreckt. Die Bearbeitung dieser Plattenteile erfolgt in gleicher Weise wie die einer eiinstückigen Platte einschließlich dem Anbringen der zuvor bereits erwähnten Nut 4.

Wie Figur 2 weiter veranschaulicht, wird in die Nuten 4 ein Kunststoffmaterial eingespritzt, wozu ein geeigneter, verflüssigbarer Kunststoff verwendet wird. Der eingespritzte Kunststoff verfestigt sich in der Nut 4, wonach er eine entweder vorübergehende oder dauerhafte Elastizität beibehält. Zum Einspritzen des Kunststoffmaterials 7 muß die jeweilige Nut 4 dicht abgedeckt werden. Dazu wird die Platte 1 gegen ein geeignetes Widerlager 5 angedrückt, welches zumindest die mit dem Kunststoffmaterial 7 zu befüllende Nut 4 entlang der längsseitigen Öffnung, die in der Ebene der Außenseite 3 der Platte 1 liegt, dicht verschließt. In diesem Widerlager 5 können ein oder mehrere Einspritzkanäle oder Einspritzdüsen vorhanden sein, durch die hindurch das flüssige Kunststoffmaterial 7 in die Nut 4 eingepreßt wird. Das Widerlager 5 kann auch Teil einer beweglichen Einspritzvorrichtung sein, die sich bei ortsfester Sicherung der Platte 1 gegen die Außenseite 3 der Platte 1 für den Einspritzvorgang anfahren läßt. Zweckmäßig bildet das Widerlager 5 eine Auflage, auf die die Platte 1 aufgelegt wird. Eine geeignete Beschichtung des Widerlagers 5 sorgt dafür, daß Kunststoffreste nicht anhaften können oder anhaftende Kunststoffreste leicht entfernbar sind. Zu diesem Zweck können auch noch besondere Trennmittel verwendet werden.

In anderer Weise nach der Erfindung werden zum Einspritzen des Kunststoffmaterials 7 vor oder nach dem Einfräsen der Nuten 4 entlang deren Richtung Einspritzkanäle 13 eingebohrt, die von der Innenseite 2 bis zur Außenseite 3 der Platte 1 durchgehen und entweder in die betreffende Nut 4 münden oder die von der Nut 4 gekreuzt werden, falls die Nut 4 im nachhinein eingeschnitten wird. Nach dem Einbohren der Einspritzkanäle 13 und dem Anbringen der Nut 4 an der Außenseite 3 der Platte 1 ergibt sich der in Figur 1 dargestellte Zustand.

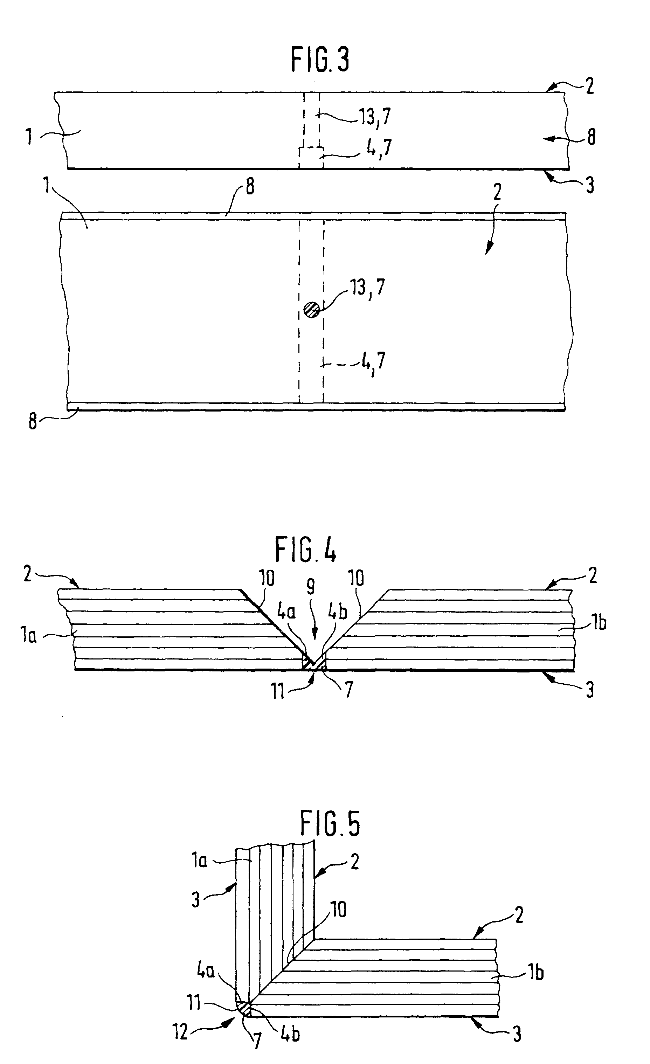

Figur 3 zeigt in der oberen Darstellung, wie zum Einspritzen des Kunststoffmaterials 7 die jeweilige Nut 4 dicht abgedeckt wird. Dazu wird die Platte 1 mit ihrer Außenseite 3 nach unten hin auf eine Unterlage 5 aufgelegt, wel-che zumindest die jeweils auszuspritzende Nut 4 oder alle Nuten 4 an ihrer Öffnungsseite dicht verschließt. Das Einspritzen des Kunststoffmaterials 7 erfolgt nun von der Innenseite 2 der Platte 1 her durch die Einspritzkanäle 13 hindurch, die sich ebenfalls mit dem Kunststoffmaterial 7 füllen.

Durch die Abdichtung der Nuten 4 kann es infolge Verdrängung einen Luftstau im Material der Platte 1 geben, der dadurch verhindert werden kann, daß entlang den Nuten 4 an der obenliegenden Innenseite 2 der Platte 1 Entlüftungsnuten oder -kanäle eingefräst werden. Das kann besonders dann zweckmäßig sein, wenn die Platte 1 mittels einer luftdicht abschließenden Deckschicht versehen ist. Sofern die Entlüftungsnuten die Einspritzkanäle 13 kreuzen, muß dafür Sorge getragen werden, daß die an die obenliegende Mündung der Einspritzkanäle 13 anzusetzende Einspritzdüse trotzdem ei nen dichten Anschluß hat.

Anschließend werden an die quer zu den ausgespritzen Nuten 4 verlaufenden Schmalseiten der Platte 1 jeweils Kantenstreifen 8 angefahren, die fest verleimt oder verklebt werden, wonach sich der in Figur 3 unten ersichtliche Zustand der Platte 1 ergibt.

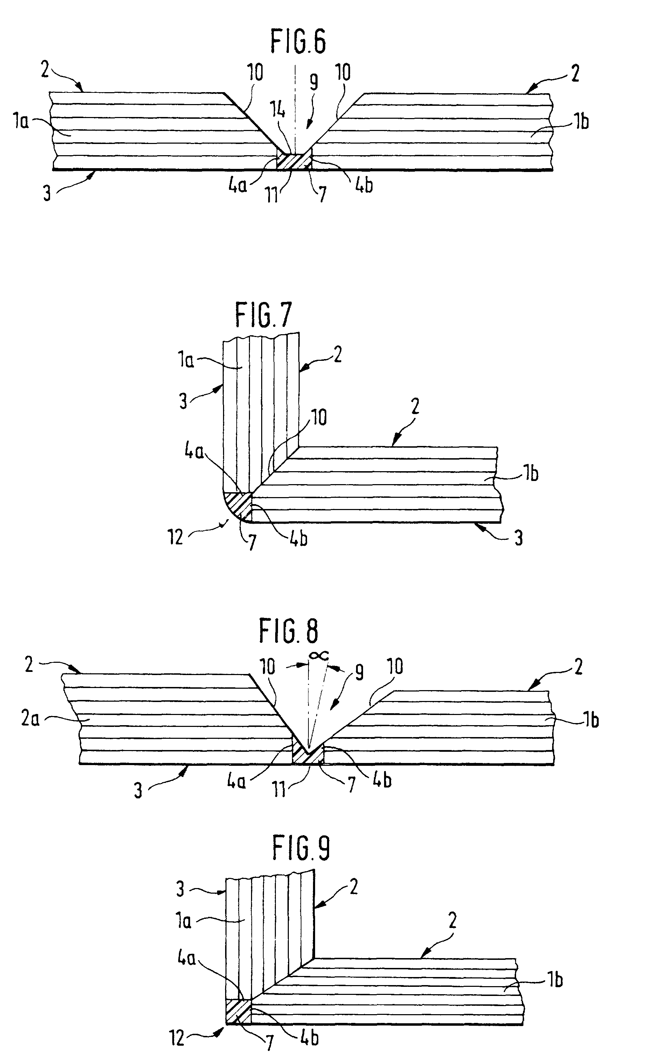

Nachfolgend werden nun durch die Kantenstreifen 8 hindurch von der Innenseite 2 her in die Platte 1 V-förmige Nuten eingefräst, die nachfolgend kurz V-Nuten 9 genannt werden, dies ergibt sich aus Figur 4. Durch das Einfräsen der V-Nuten 9 werden zugleich die mit dem Kunststoffmaterial 7 gefüllten Kanäle 13 entfernt, wie sich aus Figur 4 ebenfalls ergibt. Man erkennt hier, daß die V-Nut 9 mit ihrer Längsmittenebene, die zugleich Symmetrieebene der V-Nut 9 ist, in Richtung der Dicke der Platte 1 jeweils mit der Längsmitte einer der Nuten 4 fluchtet, die ebenfalls in gleicher Weise symmetrisch sind. Die V-Nut 9 reicht zumindest bis an das in die jeweilige Nut 4 eingespritzte Kunststoffmaterial 7 mit ihrer Scheitellinie heran, vorzugsweise ist die V-Nut 9 bis in das Kunststoffmaterial hinein eingeschnitten. Darauf wird nachstehend anhand von Figur 6 noch näher eingegangen.

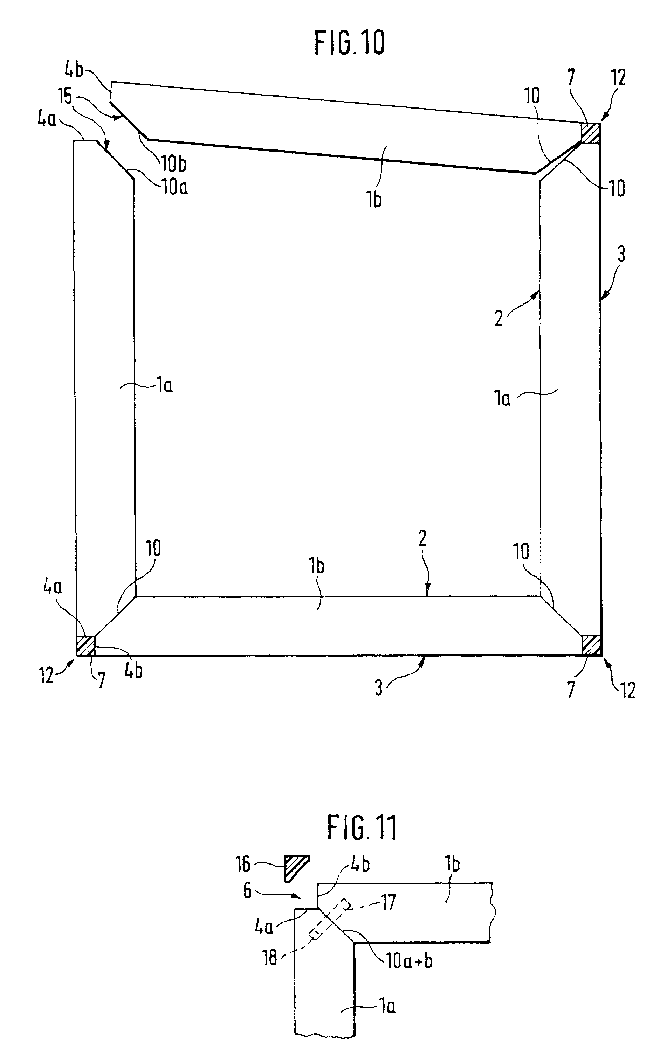

Sofern nicht von vornherein anstelle der Platte 1 getrennte Plattenteile verwendet werden, werden durch das Einfräsen der V-förmigen Nuten 9 aus der Platte 1 jeweils beidseits einer V-Nut 9 benachbarte Korpuseiten 1a und 1b gebildet, welche einander benachbarte Schmalflächenseiten haben. Diese bestehen in Gestalt der Flanken 10 der V-Nuten 9, und die beiden Flanken 10 jeder V-Nut 9 stehen rechtwinklig zueinander. Dies ist erforderlich, damit in der Endlage die beiden benachbarten Korpusseiten 1a und 1b rechtwinklig zueinander stehen, so daß insgesamt aus vier solcher miteinander verbundener Korpusseiten ein im Querschnitt rechtwinkliger oder quadratischer Korpus gebildet werden kann, wie sich anhand der noch zu erläuternden Figur 10 ergibt. Über das Kunststoffmaterial 7 sind die beiden jeweils benachbarten Korpusseiten 1a und 1b gelenkig miteinander verbunden, womit im Scheitelbereich jeder V-Nut 9 das Kunststoffmaterial 7 ein Filmscharnier 11 bildet, um die beiden Korpusseiten 1a und 1b so weit gegeneinander verschwenken zu können, bis sich die V-Nut 9 geschlossen hat, wonach die Flanken der V-Nut 9 aufeinanderliegende Gehrungsflächen bzw -fugen bilden.

Die Endlage der beiden zusammengeschwenkten Korpusseiten 1a und 1b zeigt Figur 5. Entsprechend der Verschwenkung der beiden Korpusseiten 1a und 1b relativ zueinander hat sich das Kunststoffmaterial 7 in einen winkligen oder außenseitig gerundeten Kantenstreifen verformt, der die äußere Eckkante 12 der beiden aneinandergrenzenden Korpusseiten 1a und 1b bildet. Dieser bündig an die Außenseiten 3 der Korpusseiten 1a und 1b anschließende Kantenstreifen ist in Einfälzungen 4a und 4b der Korpusseiten 1a und 1b fest eingebunden, indem das Kunststoffmaterial 7 sich mit dem Werkstoff der Korpusseiten 1a und 1b verkrallt. Die Einfälzungen 4a und 4b werden von den Flanken der Nuten 4 gebildet, die zunächst zueinander parallel sind und nach dem Verschwenken der benachbarten Korpusseiten 1a und 1b rechtwinklig zueinander stehen.

Wie zuvor erwähnt, wird vorteilhaft die V-Nut 9 bis in das Kunststoffmaterial 7 hinein eingeschnitten, und Einzelheiten hierzu zeigt Figur 6. Von der Innenseite 2 bis zur Außenseite 3 der Korpusseiten 1a und 1b hin konvergieren die Flanken 10 der V-Nut 9 derart, daß sie theroretisch in der Ebene der Außenseite 3 zusammenlaufen, dort also ihre Scheitellinie läge. Diese Scheitellinie ist das Schwenkzentrum, um welches die beiden Korpusseiten 1a und 1b gegeneinander geklappt werden. Zwar erstrecken sich die Flanken 10 der V-Nut 9 bis in das Kunststoffmaterial 7 hinein, sie reichen jedoch nicht bis zur Außenseite 3 der Korpusseiten 1a und 1b. Insoweit bildet das Kunststoffmaterial 7 ein Filmscharnier 11 von ausreichender Dicke im Bereich des Schwenkzentrums, womit andererseits beim Verschwenken der Korpusseiten 1a und 1b bis in diejenige Lage, die in Figur 7 dargestellt ist, ein größeres Volumen des Kunststoffmaterials 7 im Bereich des Filmscharniers 11 verformt werden muß. Damit dies ohne ein nachteiliges Verdrängen vonstatten geht, schließen die beiden Nutflanken 10 im Bereich des Kunststoffmaterials 7 über einen Nutgrund 14 aneinander an, der zur Außenseite 3 der Korpusseiten 1a und 1b parallel ist und eine gewisse Breite hat. Wie in Figur 7 deutlich gemacht ist, erstreckt sich nach dem Zusammenschwenken der beiden Korpusseiten 1a und 1b die durch die Nutflächen 10 gebildete Gehrungsfuge bis in den Bereich des Kunststoffmaterials 7 hinein. Durch den Freischnitt auch im Bereich des Kunststoffmaterials 7 wird beim Verschwenken der Korpusseiten 1a und 1b ein Reißen des sich verformenden Kunststoffmaterials 7 vermieden und man kann auf diese Weise Einfluß auf die Außengestaltung der Eckkante 12 zwischen den beiden zusammengeklappten Korpusseiten 1a und 1b nehmen.

Zur Anbringung der V-Nuten 9 entsprechend der Kontur nach Figur 6 wird ein spezielles Fräswerkzeug verwendet. Grundsätzlich benutzt man zum Einschneiden der V-Nuten 9 ein kegeliges Fräswerkzeug, welches für die Konfiguration der V-Nuten 9 nach dem Ausführungsbeispiel von Figur 6 als Kegelstumpf ausgebildet ist. Dieses Fräswerkzeug hat also eine Querschnittsform, welche dem Querschnitt der V-Nuten 9 mit abgeflachten Spitzen entspricht.

Figur 8 zeigt eine Besonderheit, die dann zur Anwendung kommt, wenn die Korpusseiten 1a und 1b aus zunächst getrennten Plattenteilen gebildet werden, die eine unterschiedliche Dicke haben. So hat die Korpusseite 1a eine größere Dicke als die zweite Korpusseite 1b. Die zunächst getrennten Plattenteile werden in der vorstehend beschriebenen Weise bearbeitet, indem sie mit ihren Schmalflächenseiten aneinanderliegend gegeneinander fixiert werden, wonach dann die Nut 4 mit den verbleibenden Ausfälzungen 4a und 4b eingeschnitten wird, die in der beschriebenen Weise mit dem Kunststoffmaterial 7 ausgespritzt wird. Hierdurch sind die Plattenteile, welche die Korpusseiten 1a und 1b bilden, miteinander verbunden. Danach wird dann die V-Nut 9 eingeschnitten, um sie in der geschilderten Weise um 90 Grad gegeneinander schwenken zu können, wonach sie die in Figur 9 gezeigte Position einnehmen. Hierbei muß dann allerdings die unterschiedliche Plattendicke der Korpusseiten 1a und 1b ausgeglichen werden, was durch eine besondere Art der Anbringung der V-Nut 9 geschieht. Diese V-Nut 9 wird nämlich mit ihrer entlang ihrer Längsmitte verlaufenden Symmetrieebene gegenüber derjenigen Ebene, die zu den Innenseiten 2 und den Außenseiten 3 der Plattenteile senkrecht steht, um den in Figur 8 angegebenen Winkel α gekippt. Dadurch erhalten trotz unterschiedlicher Dicke der die Korpusseiten 1a und 1b bildenden Plattenteile die beiden Nutflanken 10 eine gleiche Breite und kommen so nach dem Zusammenschwenken der Korpusseiten 1a und 1b deckungsgleich zur Anlage, wie Figur 9 wiedergibt. Dadurch ist an den Innenseiten 2 der Koprusseiten 1a und 1b ein Versprung vermieden.

In analoger Methode können selbstverständlich auch Korpusseiten 1a und 1b aus Plattenteilen gleicher Dicke miteinander verbunden und nach dem Einschneiden der V-Nuten 9 gegeneinander geschwenkt werden, hierbei erübrigt es sich jedoch, die V-Nuten 9 zu kippen. Der besondere Vorteil ist, daß Plattenteile als Reststücke immer noch Verwendung finden können, und es ist somit nicht erforderlich, alle für einen Korpus benötigten Korpusseiten aus einer einzigen, einstückigen Platte herzustellen. Grundsätzlich können alle Korpusseiten aus zunächst einzelnen Plattenteilen gebildet werden, ebenso kann eine Platte, deren Breite für zwei oder drei Korpusseiten reicht, mit einer weiteren Platte oder einem Plattenteil kombiniert werden, um alle benötigten Korpusseiten zu bilden, die in der vorbeschriebenen Weise über das Kunststoffmaterial 7 miteinander verbunden sind und verschwenkt werden können.

Figur 10 gibt einen Möbelkorpus kurz vor dem endgültigen Zusammenfügen wieder, der aus vier Korpusseiten 1a und 1b besteht, die in endgültiger Lage jeweils übereck rechtwinklig zueinander stehen, womit der fertige Korpus einen rechteckigen oder quadratischen Querschnitt erhält. Unabhängig davon, ob die Korpusseiten 1a und 1b aus einer einzigen Ausgangsplatte oder aus aneinandergefügten und in der beschriebenen Weise miteinander verbundenen Plattenteilen gebildet sind, können in der zunächst flachliegenden, ebenen Ausrichtung lediglich dort die Schwenkscharniere vorgesehen und die Eckkanten 12 vorbereitet werden, wo jeweils eine Korpusseite 1a und eine Korpusseite 1b aneinander an schließen. An der noch vierten Eckkante, die in Figur 10 leicht geöffnet dargestellt ist, müssen die beiden in der Ausgangslage beidseits außenliegenden Längskanten 15 des Verbundes der Korpusseiten 1a und 1b zusammengefügt werden. An diesen Längskanten wird deshalb in der flachliegenden Ausgangslage eine Kontur angeschnitten, die jeweils der einseitigen, hälftigen Begrenzung der Nuten 4 und der V-Nuten 9 entspricht. Dadurch ergeben sich auch hier Einfälzungen 4a und 4b, die in zusammengefügter Anordnung rechtwinklig aufeinanderstehen, wie Figur 11 zeigt, und ferner Flanken 10a und 10b, die in gleicher Weise wie die Flanken 10 der V-Nuten 9 in der zusammengefügten Lage eine Gehrungsfuge 10a + b bilden. Damit der Korpus an dieser vierten Eckkante die gleiche Ausbildung wie an den drei übrigen Eckkanten 12 erhält, wird in die durch die Fälzungen 4a und 4b gebildete Aussparung 6 Kunststoffmaterial beispielsweise in Gestalt eines Kunststoffstreifens 16 eingebracht, der u.a. durch Erhitzung eingeschweißt werden kann, um insbesondere im Bereich der vierten Eckkante nach außen hin das gleiche Aussehen wie an den drei übrigen Eckkanten 12 zu erzielen.

Für das maschinelle Zusammenfalten des Möbelkorpus kann es erforderlich sein, im Bereich der zusammenzufügenden Flanken 10a und 10b der außenliegenden Längskanten 15 des Korpusseitenverbundes Zentriermittel vorzusehen, damit in zusammengefügter Anordnung die Flanken 10a und 10b deckungsgleich aufeinanderliegen. Wie in Figur 11 angedeutet ist, kann dazu im Bereich der einen Flanke 10b ein Dübel 17 in die betreffende Korpusseite b eingelassen sein, der an der Flanke 10b in Fügerichtung vorsteht. Entsprechend weist die Korpusseite 1a im Bereich Ihrer Flanke 10a ein in Fügerichtung ausgerichtetes Dübelloch 18 auf.

Je nachdem, welche Oberflächenbeschichtung an den Außenseiten 3 der Korpusseiten 1a und 1b vorgesehen ist, kann das die Eckkanten 12 bildende Kunststoffmaterial farblich angeglichen oder kontrastierend eingefärbt sein. Bei furnierten oder mit Holzimitaten beschichteten Außenseiten 3 der Korpusseiten 1a und 1b kann eine unifarbene oder melierte Eckkante 12 störend sein, insbesondere in diesen Fällen kann man deshalb eine Bedruckung des Kunststoffmaterials 7 vorsehen. Am einfachsten geschieht dies in der noch flachliegenden Ausrichtung des Verbundes der Korpusseiten 1a und 1b, solange das in die Nuten 4 eingespritzte Kunststoffmaterial 7 mit seiner Außenfläche in einer Ebene mit den Außenseiten 3 der Korpusseiten 1a und 1b bündig liegt. Hierzu unterlegt man die Nuten 4 mit einem sogenannten Prägeband, welches an seiner mit dem Kunststoffmaterial 7 in Kontakt kommenden Seite einen Farbauftrag hat, der sich auf das Kunststoffmaterial 7 überträgt, wozu ein gewisser Andruck vorgesehen werden kann.

## Patentansprüche

1. Verfahren zum Herstellen von Möbelkorpussen mit entlang gemeinsamer Eckkanten (12) miteinander über Gehrungsflächen (10) verbundenen Korpusseiten (1a,1b) aus Holz oder holzartigen Werkstoffen, bei dem an einer Platte (1) an der im nachhinein außenliegenden Seite, der Außenseite (3), entlang der zu bildenden Eckkanten (12) ein Filmscharnier (11) aus einem biegsamen Material angebracht und dann an der im nachhinein innenliegenden Seite, der Innenseite (2), entlang der zu bildenden Eckkante (12) eine im Querschnitt symmetrische, V-förmige Nut (9) bis an das Filmscharnier (11) heran eingefräst wird, wonach die hierdurch gebildeten, voneinander abgeteilten Korpusseiten (1a, 1b) unter Schließen der mit ihren Flanken die aneinanderliegenden Gehrungsflächen (19) bildenden V-Nut (9) um die durch das Filmscharnier (11) hindurchgehende Achse gegeneinander geschwenkt werden,
**dadurch gekennzeichnet,**
**daß** vor dem Fräsen der V-Nut (9) an der Außenseite (3) der Platte (1) entlang der zu bildenden Eckkante (12) eine Nut (4) eingeschnitten und darin ein zunächst flüssiges Kunststoffmaterial (7) eingespritzt wird, welches sich zu einem biegsamen Streifen verfestigt, der das Filmscharnier (11) bildet.

2. Verfahren nach Anspruch 1,
**dadurch gekennzeichnet,**
**daß** anstelle der Platte (1) zunächst voneinander getrennte, die Korpusseiten (1a, 1b) bildende Plattenteile verwendet werden, die entlang der zu bildenden Eckkante (12) mit ihren Schmalflächenseiten dicht aneinander gefügt sowie fixiert und im übrigen dann in gleicher Weise wie die einstückige Platte (1) bearbeitet werden.

3. Verfahren nach Anspruch 2,
**dadurch gekennzeichnet,**
**daß** bei Verwendung von benachbarte Korpusseiten (1a, 1b) bildenden Plattenteilen unterschiedlicher Dicke die Symmetrieebene der dazwischen einzuschneidenden V-Nut (9) derart gekippt wird, daß die beiden Flanken der V-Nut (9) die gleiche Breite haben.

4. Verfahren nach einem der Ansprüche 1 bis 3,
**dadurch gekennzeichnet,**
**daß** die Platte (1) nach dem Anbringen der Nut (4) mit ihrer Außenseite (3) gegen ein die Nut (4) abdichtendes Widerlager (5) angelegt wird und danach die Einspritzung des Kunststoffmaterials (7) vorgenommen wird.

5. Verfahren nach Anspruch 4,
**dadurch gekennzeichnet,**
**daß** das Widerlager (5) eine Unterlage ist, auf die die Platte (1) nach dem Anbringen der Nut (4) mit ihrer Außenseite (3) aufgelegt wird.

6. Verfahren nach Anspruch 4 oder 5,
**dadurch gekennzeichnet,**
**daß** das Kunststoffmaterial (7) durch einen Einspritzkanal in dem Widerlager (5) hindurch eingespritzt wird.

7. Verfahren nach einem der Ansprüche 1 bis 5,
**dadurch gekennzeichnet,**
**daß** in die Platte (1) vor oder nach dem Anbringen der Nut (4) an deren Außenseite (3) im Bereich der zu bildenden Eckkante (12) zumindest ein von der Innenseite (2) zur Außenseite (3) durchgehender Einspritzkanal (13) eingebohrt wird, anschließend die Nut (4) an ihrer Öffnung an der Außenseite (3) der Platte (1) dicht verschlossen und danach durch den Einspritzkanal (13) hindurch von der Innenseite (2) der Platte (1) her das Kunststoffmaterial (7) in die Nut (4) eingespritzt wird, wonach mit dem Fräsen der V-Nut (9) an der Innenseite (2) der Platte (1) zugleich der mit dem Kunststoffmaterial (7) ausgefüllte Einspritzkanal (13) entfernt wird.

8. Verfahren nach Anspruch 7,
**dadurch gekennzeichnet,**
**daß** entlang des Bereichs der zu bildenden Eckkante (12) an der Innenseite (2) der Platte (1) im Falle einer die Platte abdichtenden Kaschierung durch diese hindurch eine Entlüftungsnut eingeschnitten wird.

9. Verfahren nach einem der Ansprüche 1 bis 8,
**dadurch gekennzeichnet,**
**daß** in die Außenseite (3) der Platte (1) die Nut (4) mit einem rechteckigen oder quadratischen Format eingefräst wird und das darin eingefüllte Kunststoffmaterial (7) beim Anbringen der V-Nut (9) von der Innenseite der Platte (1) her zwecks Ausbildung eines dünnen, das Filmscharnier (11) bildenden Stegs angeschnitten wird.

10. Verfahren nach Anspruch 9,
**dadurch gekennzeichnet,**
**daß** die V-Nut (9) derart eingeschnitten wird, daß sie eine theoretische Scheitellinie hat, die in der Ebene der Außenseite (3) der Platte (1) verläuft, indem die Nutflanken (10) bis in das Kunststoffmaterial (7) hineinreichen und dort über einen zur Außenseite (3) der Platte (1) parallelen Nutgrund (14) aneinander anschließen.

11. Verfahren nach Anspruch 10,
**dadurch gekennzeichnet,**
**daß** die V-Nut (9) unter Verwendung eines Fräsers eingeschnitten wird, der die Gestalt eines Kegelstumpfes mit entsprechend abgeflachter Spitze hat.

12. Verfahren nach einem der Ansprüche 1 bis 11,
**dadurch gekennzeichnet,**
**daß** nach dem Anbringen der Nut (4) an der Außenseite (3) der Platte (1) an den zu dieser Nut (4) quer verlaufenden Schmalflächenseiten der Platte (1) Kantenstreifen (8) angeleimt werden, durch die hindurch die V-Nut (9) an'der Innenseite (2) der Platte (1) eingeschnitten wird.

13. Verfahren nach einem der Ansprüche 1 bis 12,
**dadurch gekennzeichnet,**
**daß** das Kunststoffmaterial (7) nach dem Einbringen in die Nut (4) der Platte (1) zumindest in dem an die Außenseite (3) der Platte (1) anschließenden Außenbereich eingefärbt wird.

14. Verfahren nach Anspruch 13,
**dadurch gekennzeichnet,**
**daß** die Nut (4) mit einer Prägefolie unterlegt wird, die einen auf das Kunststoffmaterial (7) in der Nut (4) übertragbaren Farbauftrag aufweist.

15. Verfahren nach einem der Ansprüche 1 bis 14,
**dadurch gekennzeichnet,**
**daß** ein Möbelkorpus aus vier Korpusseiten (1a, 1b) zusammengefügt wird, wonach benachbarte Korpusseiten (1a, 1b) rechtwinklig zueinander stehen, wozu zunächst der Flankenwinkel der V-Nuten (9) 90 Grad beträgt, wobei an die äußeren, freien Kanten (15) der beidendig außenliegenden Korpusseiten (1a, 1b) der insgesamt miteinander verbundenen Korpusseiten jeweils eine Kontur angeschnitten wird, die der hälftigen Kontur der Nuten (4) sowie der V-Nuten (9) entspricht, wonach nach dem Zusammenfalten des Korpus unter Zusammenfügen der Flanken (10a + 10b) der Kontur der hälftigen V-Nuten (9) in die durch die Kontur der hälftigen Nuten (4) gebildete Aussparung (6) Kunststoffmaterial so eingebracht wird, daß sich die gleiche Außenkontur der hierdurch gebildeten Eckkante wie an den übrigen drei Eckkanten (12) ergibt.

16. Verfahren nach Anspruch 15,
**dadurch gekennzeichnet,**
**daß** an der einen Flanke (10a oder 10b) der betreffenden äußeren, freien Kante (15) der einen der beiden Korpusseiten (1a oder 1b) ein in Fügerichtung vorstehender Zentrierdübel (17) und entsprechend an der anderen Flanke (10b oder 10a) der freien Kante (15) der zweiten außenliegenden Korpusseiten (1b oder 1a) eine Dübelöffnung (18) angebracht wird.

## Claims

1. Method of manufacturing furniture carcasses with carcass faces made from wood or wood-like substances connected with each other along common corner edges (12) by means of mitre surfaces (10) wherein on a panel (1) on the outer face (3) of the ultimately outer-lying side, a film hinge (11) made from a flexible material is arranged along the corner edges (12) which will be formed and then on the ultimately inner-lying side, a V-shaped groove (9) which is symmetrical in cross-section is moulded as far as the film hinge (11) on the inner face (2), along the corner edge (12) which will be formed, after which the hereby formed carcass faces (1a, 1b) divided up from each other with the closure of the V-groove forming with its flanks the mitre surfaces (2) lying against each other are pivoted against each other about the axis going through the film hinge (11)
**characterised in that**
before the moulding of the V-groove (9) on the outer side (3) of the panel (1) along the comer edge (12) which will be formed a groove (4) is cut in and an initially liquid synthetic material (7) is injected therein which hardens to a flexible strip which forms the film hinge (11).

2. Method according to claim 1
**characterised in that**
instead of the panel (1), panel components initially separated from each other forming the carcass faces (1a, 1b) are used which are joined with their narrow surface faces closely against each other and fixed along the corner edge (12) which will be formed and moreover the one-component panel (1) is then processed in the same way.

3. Method according to claim 2
**characterised in that**
when panel components of different thickness forming adjacent carcass faces (1a, 1b) the symmetry plane of the V-groove (9) to be cut between them is tilted in such a way that the two flanks of the V-groove have the same breadth.

4. Method according to one of the claims 1 to 3
**characterised in that**
the panel (1), after the arrangement of the groove (4), is placed with its outer side (3) against an abutment (5) sealing the groove (4) and afterwards the injection of the synthetic material (7) is undertaken.

5. Method according to claim 4
**characterised in that**
the abutment (5) is a support, on which the panel (1) is placed with its outer side (3) after arrangement of the groove (4).

6. Method according to claim 4 or 5
**characterised in that**
the synthetic material (7) is injected through an injection channel in the abutment (5).

7. Method according to one of the claims 1 to 5
**characterised in that**
before or after arrangement of the groove (4) at least one injection channel (13) running from the inner side (2) to the outer side (3) is bored into the panel (1) on its outer side (3) in the region of the corner edge (12) which will be formed, subsequently the groove (4) is tightly closed on its opening on the outer side (3) of the panel (1) and afterwards the synthetic material (7) is injected into the groove (4) through the injection channel (13) from the inner side (2) of the panel (1), after which with the milling of the V-groove (9) on the inner side (2) of the panel (1) at the same time the injection channel (13) filled with the synthetic material (7) is removed.

8. Method according to claim 7
**characterised in that**
along the region of the corner edge (12) which will be formed on the inner side (2) of the panel (1) in the case of a coating sealing the plate a ventilation groove is cut in through this.

9. Method according to one of the claims 1 to 8
**characterised in that**
the groove (4) is mill-cut with a right-angled or square format into the outer side (3) of the panel (1) and the synthetic material (7) filled therein, upon arrangement of the V-groove (9), is cut from the inner side of the panel (1) for the purpose of forming a thin web forming the film hinge (11).

10. Method according to claim 9
**characterised in that**
the V-groove (9) is cut in such a way that it has a theoretical peak line which runs in the plane of the outer side (3) of the panel (1) **in that** the groove flanks (10) extend into the synthetic material (7) and connect against each other there by means of a groove bottom (14) parallel to the outer side (3) of the panel (1).

11. Method according to claim 10
**characterised in that**
the V-groove (9) is cut using a milling cutter which has the formation of a truncated cone with an accordingly flattened peak.

12. Method according to one of the claims 1 to 11
**characterised in that**
after the arrangement of the groove (4) on the outer side (3) of the panel (1) edge strips (8) are stuck onto the narrow surface faces of the panel (1) running at right angles to this groove (4) and through these edge strips (8) the V-groove (9) is cut on the inner side (2) of the panel (1).

13. Method according to one of the claims 1 to 12
**characterised in that**
the synthetic material (7), after arrangement in the groove (4) of the panel (1), is dyed at least in the outer region connecting to the outer side (3) of the panel (1).

14. Method according to claim 13
**characterised in that**
the groove (4) is has an embossed film underlay which has a colour coating which can be transferred to the synthetic material (7) in the groove (4).

15. Method according to one of the claims 1 to 14
**characterised in that**
a furniture carcass is put together from four carcass faces (1a, 1b), after which adjacent carcass faces (1a, 1b) are at right angles to each other, for which purpose initially the flank angle of the V-grooves (9) is 90 degrees, wherein a contour is respectively cut on the outer free edges (15) of the carcass faces (1a, 1b), outer-lying at both ends, of the carcass faces which are connected with each other as a whole and wherein this contour corresponds to the halved contour of the grooves (4) as well as the V-grooves (9), after which after the folding together of the carcass with joining together of the flanks (10a + 10b) of the contour of the halved V-grooves (9) synthetic material is arranged in the recess (6) formed by the contour of the halved grooves (4) in such a way that the same outer contour of the hereby formed corner edge results as on the other three corner edges (12).

16. Method according to claim 15
**characterised in that**
on one flank (10a or 10b) of the relevant outer free edge (15) of one of the two carcass faces (1a or 1b) a centring dowel (17) projecting in the joining direction is arranged and accordingly on the other flank (10b or 10a) of the free edge (15) of the second outer-lying carcass faces (1b or 1a) a dowel opening (18) is arranged.

## Revendications

1. Processus de fabrication de corps de meubles avec des parties latérales de corps (1a, 1b) en bois ou en matériaux genre bois, qui sont reliées ensemble, le long de bords angulaires communs (12), par l'intermédiaire de surfaces en onglet (10), processus dans le cadre duquel une plaque (1) est équipée d'une charnière pelliculaire (1) en matière flexible, sur le côté situé par la suite à l'extérieur, donc le côté externe, le long des bords angulaires (12) qui doivent être formés, puis pourvue, sur le côté situé par la suite à l'intérieur, donc le côté interne (2), le long du bord angulaire (12) à former, d'une entaille en forme de V (9), qui présente une section transversale symétrique et est fraisée jusqu'à la charnière pelliculaire (11), ce après quoi les parties latérales de corps de meubles (1a, 1b), ainsi formées, séparées l'une de l'autre, sont pivotées, l'une contre l'autre, sur l'axe de la charnière pelliculaire (11), en fermant l'entaille en V (9), dont les flancs forment les surfaces en onglet (19) qui portent l'une contre l'autre,
**caractérisé en ce que**,
avant le fraisage de l'entaille en forme de V (9), sur le côté extérieur (3) de la plaque (1), le long du bord angulaire (12) à former, une entaille (4) est découpée, dans laquelle une matière plastique (7), d'abord liquide, est injectée, laquelle durcit ensuite en une bande flexible, qui forme la charnière pelliculaire (11).

2. Processus selon la revendication 1,
**caractérisé en ce que**
des morceaux de plaque, qui forment les parties latérales de corps de meuble (1a, 1b) tout d'abord séparées les unes des autres, sont utilisés à la place de la plaque (1), lesquels sont assemblés étroitement, le long du bord angulaire (12) à former, ainsi que fixés, et, par ailleurs, travaillés ensuite de la même manière que la plaque formée d'une seule pièce (1).

3. Processus selon la revendication 2,
**caractérisé en ce que**,
lors de l'utilisation de morceaux de plaque de différente épaisseur, formant des parties latérales avoisinantes (1a, 1b) de corps de meubles, le plan de symétrie de l'entaille en forme de V (9), à découper entre elles, est basculé de sorte que les deux flancs de ladite entaille en forme de V présentent la même largeur.

4. Processus selon l'une des revendication 1 à 3,
**caractérisé en ce que**
le côté extérieur (3) de la plaque (1), après insertion de l'entaille (4), vient porter contre une butée (5), qui assure l'étanchéité de ladite entaille (4), et que l'injection de la matière plastique (7) est effectuée ensuite.

5. Processus selon la revendication 4,
**caractérisé en ce que**
la butée (5) est un appui, contre lequel la plaque (1), est appliquée, avec son côté extérieur (3), après avoir été pourvue de l'entaille (4).

6. Processus selon la revendication 4 ou 5,
**caractérisé en ce que**
la matière plastique (7) est injectée à travers un canal d'injection pratiqué dans la butée (5).

7. Processus selon l'une des revendications 1 à 5,
**caractérisé en ce que**,
dans la plaque (1), avant ou après que l'entaille (4) ait été pratiquée sur le côté extérieur (3) de celle-ci, un canal d'injection (13), au moins, qui la traverse du côté intérieur (2) au côté extérieur (3), est perforé dans le secteur du bord angulaire (12) a former, l'entaille (4) fermée ensuite de façon étanche, par son ouverture donnant sur le côté extérieur (3) de la plaque (1), puis, par le canal d'injection (13), à partir du côté intérieur (2) de la plaque (1), la matière plastique (7) injectée dans la rainure (4), et, après cela, lors du fraisage de l'entaille en forme de V (9), sur le côté intérieur (2) de la plaque (1), le canal d'injection (13), rempli de matière plastique (7), est supprimé en même temps.

8. Processus selon la revendication 7,
**caractérisé en ce que**,
en cas de revêtement étanche de la plaque (1), une rainure d'aération est incisée dans celui-ci, sur le côté intérieur (2) de ladite plaque (1), le long du secteur angulaire (12) à former.

9. Processus selon l'une des revendications 1 à 8,
**caractérisé en ce que**,
sur le côté extérieur (3) de la plaque (1), l'entaille (4) est fraisée en forme de rectangle ou de carré et que, lors de l'exécution de l'entaille en forme de V (9), la matière plastique (7), qui la remplit, est entamée, à partir du côté intérieur de la plaque (1), dans le but d'obtenir une bande fine qui forme la charnière pelliculaire.

10. Processus selon la revendication 9,
**caractérisé en ce que**
l'entaille en forme de V (9) est découpée de sorte à présenter une ligne de sommet théorique qui est orientée dans le plan du côté extérieur (3) de la plaque (1), les flancs (10) de l'entaille s'étendant jusque dans la matière plastique (7) où ils se joignent par l'intermédiaire d'un fond d'encoche (14) parallèle au côté extérieur (3) de la plaque (1).

11. Processus selon la revendication 10,
**caractérisé en ce que**
l'entaille en forme de V (9) est découpée à l'aide d'une fraise qui présente la forme d'un cône tronqué, avec pointe adéquatement aplatie.

12. Processus selon l'une des revendication 1 à 11,
**caractérisé en ce que**,
après que l'entaille (4) ait été exécutée sur le côté extérieur (3) de la plaque (1), des bandes de lisière (8) sont collées sur les côtés des surfaces étroites de la plaque (1) s'étendant transversalement par rapport à cette entaille (4), bandes de lisière (8) à travers lesquelles l'entaille en forme de V (9) est découpée sur le côte intérieur (2) de la plaque (1).

13. Processus selon l'une des revendication 1 à 12,
**caractérisé en ce que**
la matière plastique (7), après avoir été appliquée dans l'entaille (4) de la plaque (1), est teinte, tout au moins dans le secteur extérieur adjacent au côté extérieur (3) de la plaque (1).

14. Processus selon la revendication 13,
**caractérisé en ce**
**que** l'entaille (4) est pourvue d'une feuille grainée qui présente une couche de peinture qui peut être transmise à la matière plastique (7) contenue dans la rainure (4).

15. Procédé selon l'une des revendications 1 à 14,
**caractérisé en ce qu'**
un corps de meuble consiste en un assemblage de quatre parties latérales (1a, 1b) selon lequel les parties latérales (1a, 1b) voisines sont disposées à angle droit par rapport les unes aux autres, l'angle des flancs des entailles en forme de V (9) étant, tout d'abord, de 90 degrés, un contour, qui correspond à la moitié du contour des entailles (4) ainsi que des entailles (9), étant découpé respectivement sur les bords libres, extérieurs (15) des parties latérales du corps de meuble, toutes reliées ensemble, puis, après le pliage du corps, lors de l'assemblage des flancs (10a + 10b), de la matière plastique est insérée dans l'évidement (6), formé par le contour des moitiés d'entailles (4) de sorte que l'on obtient le même contour extérieur pour les bords angulaires ainsi formés que pour les trois autres bords angulaires (12).

16. Procédé selon la revendication 15,
**caractérisé en ce que**,
l'un des flancs (10a ou 10b) du bord libre, extérieur, concerné (15) de l'une des deux parties latérales (1a ou 1b) du corps de meuble, est pourvu d'un goujon de centrage (17), qui fait saillie dans le sens d'assemblage, et qu'une ouverture de goujonnage est prévue adéquatement sur l'autre flanc (10b ou 10a) du bord libre (15) de la deuxième partie latérale située à l'extérieur (1b ou la).
